# EUROPÄISCHE PATENTSCHRIFT

(11) **EP 2 222 949 B1**
(45) Veröffentlichungstag und Bekanntmachung des Hinweises auf die Patenterteilung: **03.10.2012**
(21) Anmeldenummer: 08859854.5
(22) Anmeldetag: 27.11.2008
(51) Int. Cl.: F02M 59/46, F02M 59/36, F02M 59/20, F02M 63/00

(54) **KRAFTSTOFFZUMESSEINHEIT FÜR EINE KRAFTSTOFFHOCHDRUCKPUMPE UND KRAFTSTOFFHOCHDRUCKPUMPE**
FUEL METERING DEVICE FOR A HIGH-PRESSURE FUEL PUMP AND HIGH-PRESSURE FUEL PUMP
UNITÉ DE DOSAGE DU CARBURANT POUR UNE POMPE À CARBURANT À HAUTE PRESSION ET POMPE À CARBURANT À HAUTE PRESSION

(30) Priorität: 12.12.2007 DE 102007059855
(43) Veröffentlichungstag der Anmeldung: 01.09.2010
(73) Patentinhaber: Robert Bosch GmbH, 70442 Stuttgart (DE)
(72) Erfinder: WIELAND, Steffen, 71336 Waiblingen (DE); SCHIEBER-STITZ, Marion, 71554 Weissach im Tal (DE); LANDENBERGER, Tobias, 73614 Schorndorf (DE); MIEHLE, Tilman, 71334 Waiblingen (DE); WESSNER, Jochen, 73728 Esslingen (DE)
(86) Internationale Anmeldenummer: PCT/EP2008/066285
(87) Internationale Veröffentlichungsnummer: WO 2009/074457

(56) Entgegenhaltungen:
- EP-A- 1 146 222
- DE-A1- 10 247 436
- DE-A1-102005 025 872
- US-A- 4 482 094
- US-A1- 2001 013 556
- US-A1- 2003 089 872
- US-A1- 2004 261 771

## Beschreibung

### Stand der Technik

Die Erfindung geht aus von einer Kraftstoffzumesseinheit für eine Kraftstoffhochdruckpumpe nach der Gattung des Anspruchs 1.

Eine solche Kraftstoffzumesseinheit ist durch die DE 10 2005 025 872 A1 bekannt. Diese Kraftstoffzumesseinheit dient zur saugseitigen Fördermengenregelung einer Kraftstoffhochdruckpumpe, die Teil einer Kraftstoffeinspritzeinrichtung einer Brennkraftmaschine ist Die Kraftstoffzumesseinheit weist ein von einem Elektromagneten betätigtes Regelventil mit einem Ventilglied auf, durch das im Ansaugbereich der Kraftstoffhochdruckpumpe unterschiedliche Durchflussquerschnitte eingestellt werden können und dadurch die Fördermengenregelung der Kraftstoffhochdruckpumpe ermöglicht ist. Der Elektromagnet weist einen Anker und einen beweglichen Ankerbolzen auf, durch den das Ventilglied bewegbar ist Der Ankerbolzen ist in wenigstens einer Lagerbuchse axial verschiebbar geführt Diese wenigstens eine Lagerbuchse kann beispielsweise aus Bronze hergestellt sein. Üblicherweise werden Lagerbuchsen durch Rollen aus einem Bandmaterial hergestellt, so dass diese eine Stoßfuge aufweisen. Während des Betriebs der Kraftstoffzumesseinheit kann es dabei zu einem Quellen der Lagerbuchse kommen, wobei diese sich aufweitet. Außerdem ist die Maßhaltigkeit derartiger gerollter Lagerbuchsen unter Umständen nicht ausreichend. Es ist auch bekannt derartige Lagerbuchsen im Bereich der Lagerfläche, in der der Ankerbolzen geführt ist, mit einer Beschichtung beispielsweise aus PTFE zu versehen, um die Gleiteigenschaften zu verbessern und damit den Verschleiß gering zu halten. Die Herstellung derartiger Beschichtungen ist jedoch zukünftig in verschiedenen Märkten, wie beispielsweise USA, wegen deren Umweltschädlichkeit (Verwendung von z.B. PFOA) nicht mehr zulässig. Die üblichen gerollten Lagerbuchsen weisen eine geringe Wandstärke auf, so dass eine im Durchmesser etwa dem Durchmesser des Ankerbolzen entsprechende Aufnahme für die Lagerbuchse erforderlich ist.

### Offenbarung der Erfindung

### Vorteile der Erfindung

Die erfindungsgemäße Kraftstoffzumesseinheit mit den Merkmalen gemäß Anspruch 1 hat den Vorteil, dass eine genaue Lagerung des Ankerbolzens und ein geringer Verschleiß der Lagerung ermöglicht sind. Die Lagerbuchse kann als massives Bauteil mit hoher Genauigkeit hergestellt werden und diese verformt sich auch während des Betriebs der Kraftstoffzumesseinheit nicht Durch die als massives Bauteil ausgeführte Lagerbuchse können auch relativ große Durchmesserunterschiede zwischen dem Durchmesser des Ankerbolzens und dem Durchmesser einer Aufnahme für die Lagerbuchse ausgeglichen werden.

In den abhängigen Ansprüchen sind vorteilhafte Ausgestaltungen und Weiterbildungen der erfindungsgemäßen Kraftstoffzumesseinheit angegeben. Durch die Ausbildung gemäß Anspruch 3 sind gute Gleiteigenschaften und eine hohe Verschleißfestigkeit der Lagerung des Ankerbolzens ermöglicht

### Zeichnung

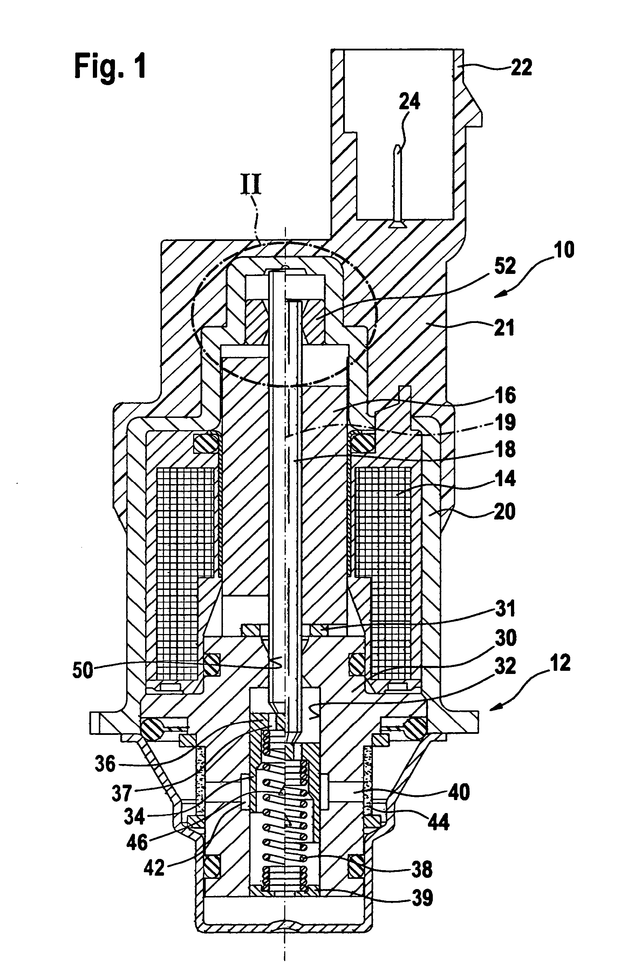

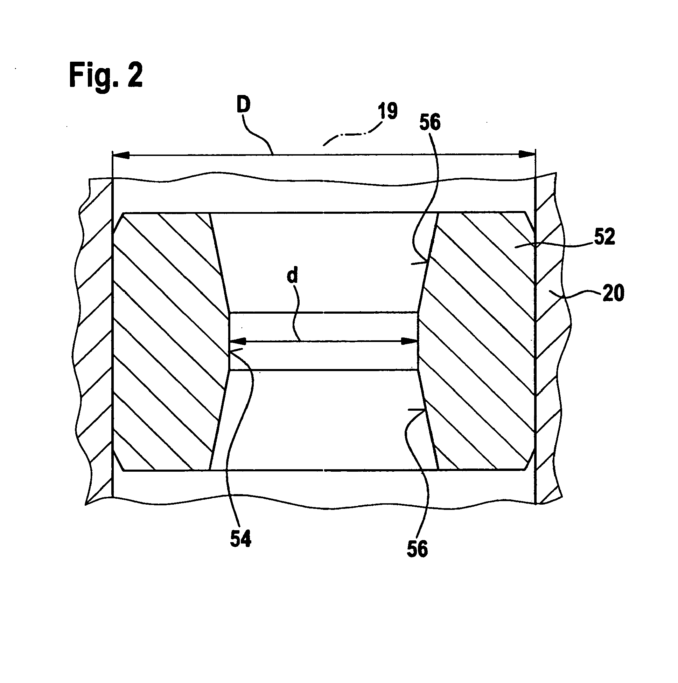

Ein Ausführungsbeispiel der Erfindung ist in der Zeichnung dargestellt und in der nachfolgenden Beschreibung näher erläutert. Es zeigen Figur 1 eine Kraftstoffzumesseinheit in einem Längsschnitt und Figur 2 in vergrößerter Darstellung eine Lagerbuchse gemäß Ausschnitt II der Kraftstoffzumesseinheit von **Figur 1****.**

### Beschreibung des Ausführungsbeispiels

In Figur 1 ist eine erfindungsgemäße Kraftstoffzumesseinheit in einem Längsschnitt dargestellt Die Kraftstoffzumesseinheit ist in der Kraftstoffströmung zwischen einer Vorförderpumpe und einer Kraftstoffhochdruckpumpe einer Kraftstoffeinspritzeinrichtung für eine Brennkraftmaschine angeordnet und dient dazu die von der Kraftstoffhochdruckpumpe geförderte Kraftstoffmenge variabel einzustellen. Durch die Kraftstoffzumesseinheit wird dabei ein veränderlicher Durchflussquerschnitt zwischen der Vorförderpumpe und der Kraftstoffhochdruckpumpe eingestellt. Die Kraftstoffzumesseinheit wird von einer elektronischen Steuereinrichtung angesteuert, durch die Betriebsparameter der Brennkraftmaschine ausgewertet werden und abhängig davon eine erforderliche Fördermenge der Kraftstoffhochdruckpumpe ermittelt wird. Die Kraftstoffzumesseinheit kann an der Kraftstoffhochdruckpumpe angeordnet sein oder eine separate Baueinheit bilden.

Die Kraftstoffzumesseinheit weist einen Elektromagneten 10 und einen durch diesen betätigtes Regelventil 12 auf. Die wesentlichen Bauteile des Elektromagneten 10 sind eine Magnetspule 14, ein Anker 16 mit Ankerbolzen 18 und ein Magnettopf 20, der die Magnetspule 14 und den Anker 16 teilweise umschließt Der Magnettopf 20 ist teilweise mit Kunststoff umspritzt, wobei an der Umspritzung 21 ein Steckergehäuse 22 ausgeformt ist, in dem wenigstens ein elektrischer Anschluss 24 für die Magnetspule 14 angeordnet ist

Das Regelventil 12 weist ein Ventilgehäuse 30 auf, das zugleich als Magnetkern dient Im Ventilgehäuse 30 ist eine Längsbohrung 32 vorgesehen, in der ein kolbenförmiges Ventilglied 34 des Regelventils 12 verschiebbar geführt ist Das Ventilglied 34 ist topfförmig und hohl ausgebildet, wobei an dessen Boden 36 der Ankerbolzen 18 mit seinem Stirnende anliegt Das Ventilglied 34 wird durch eine in diesem angeordnet vorgespannte Feder 38, beispielsweise eine Schraubendruckfeder, in Anlage am Ankerbolzen 18 gehalten. Die Feder 38 stützt sich einerseits an der Innenseite des Bodens 36 des Ventilglieds 34 und andererseits an einem in die Längsbohrung 32 eingesetzten ringförmigen Sicherungselement 39 ab. Im Boden 36 des Ventilglieds 34 sind wenigstens eine, vorzugsweise mehrere Öffnungen 37 vorgesehen, durch die bei der axialen Bewegung des Ventilglieds 34 in der Längsbohrung 32 Kraftstoff hindurchströmen kann. Durch die Öffnungen 37 ist ein Druckausgleich auf beiden Seiten des Ventilglieds 34 in der Längsbohrung 32 ermöglicht, so dass das Ventilglied 34 zumindest annähernd druckausgeglichen ist Am Umfang des Ventilgehäuses 30 sind wenigstens eine, vorzugsweise mehrere Öffnungen 40, beispielsweise in Form von radialen Bohrungen, vorgesehen, die mit einem Kraftstoffzulauf von der Vorförderpumpe her verbunden sind. Die Öffnungen 40 können am Umfang der Längsbohrung 32 im Ventilgehäuse 30 in einer umlaufenden Ringnut 42 münden. Auf dem Ventilgehäuse 30 kann im Bereich der Öffnungen 40 ein ringförmiger Filter 44 angeordnet sein, durch den verhindert wird, dass Verschmutzungen in das Regelventil 12 eintreten können. Der Kraftstoffablauf aus dem Regelventil 12 zur Kraftstoffhochdruckpumpe hin erfolgt aus dem Inneren des Ventilglieds 34 durch die offene, dem Elektromagneten 10 abgewandte Seite des Ventilgehäuses 30 aus der Längsbohrung 32 heraus.

Das Ventilglied 34 weist in seinem Umfang nahe dessen offenem Ende wenigstens eine, vorzugsweise mehrere Steueröffnungen 46 auf, durch die bei der axialen Bewegung des Ventilglieds 34 in der Längsbohrung 32 die Größe des Durchflussquerschnitts zwischen dem Zulauf und Ablauf des Regelventils 12 gesteuert wird. Die Steueröffnungen 46 können beispielsweise einen dreieck-, trapez- oder rechteckförmigen Querschnitt aufweisen. Je mehr sich die Steueröffnungen 46 in Überdeckung mit der Ringnut 42 befinden desto größer ist der Durchflussquerschnitt. In nicht bestromtem Zustand des Elektromagneten 10 befindet sich das Ventilglied 34 durch die Feder 38 bewirkt in einer Öffnungsstellung, in der sich dessen Steueröffnungen 46 vollständig mit der Ringnut 42 überdecken, so dass der Durchflussquerschnitt voll geöffnet ist, also die maximale Kraftstoffmenge von der Vorförderpumpe her durch das Regelventil 12 zur Kraftstoffhochdruckpumpe strömen kann. Mit zunehmender Bestromung des Elektromagneten 10 wird das Ventilglied 34 durch den Ankerbolzen 18 gegen die Kraft der Feder 38 in der Längsbohrung 32 verschoben, so dass dessen Steueröffnungen 46 weniger in Überdeckung mit der Ringnut 42 gelangen und ein kleinerer Durchflussquerschnitt von der Vorförderpumpe zur Kraftstoffhochdruckpumpe freigegeben wird. Wenn sich die Steueröffnungen 46 nicht mehr in Überdeckung mit der Ringnut 42 befinden, so ist der Durchflussquerschnitt geschlossen. Durch die Querschnittsform der Steueröffnungen 46 können unterschiedliche Charakteristika des Verlaufs des eingestellten Durchflussquerschnitts abhängig vom Hub des Ventilglieds 34 erreicht werden. In Figur 1 ist das Ventilglied 34 in der linken Hälfte in seiner voll geöffneten Stellung und in der rechten Hälfte in seiner geschlossenen Stellung dargestellt Zwischen dem Anker 16 und dem Ventilgehäuse 30 ist ein Resttuftspattscheibe 31 angeordnet, durch die verhindert wird, dass der Anker 16 am Ventilgehäuse 30 zur Anlage kommt

Der Ankerbolzen 18 ragt vom Magnettopf 20 durch eine Öffnung 50 im Ventilgehäuse 30 hindurch in die Längsbohrung 32 hinein. Die Öffnung 50 kann dabei eine Lagerstelle für den Ankerbolzen 18 bilden, in der dieser in Richtung seiner Längsachse 19 verschiebbar geführt ist. In seinem dem Ventilgehäuse 30 abgewandten Endbereich ist der Ankerbolzen 18 in einer Lagerbuchse 52 in Richtung seiner Längsachse 19 verschiebbar geführt Die Lagerbuchse 52 ist in eine hohlzylinderförmige Aufnahme des Magnettopfs 20 eingesetzt, beispielsweise eingepresst Unter Bezug auf Figur 2 wird die Lagerbuchse 52 nachfolgend beschrieben. Die Lagerbuchse 52 ist als massives ungeteiltes Bauteil aus Metall mit einer zylindrischen Außenform ausgeführt und weist einen Außendurchmesser D auf über den die Lagerbuchse 52 in der Aufnahme im Magnettopf 20 eingepresst ist Die Lagerbuchse 52 ist beispielsweise aus Stahl und mittels eines spanenden Fertigungsverfahrens, beispielsweise Drehen und Bohren, hergestellt. Durch diese spanende Fertigungsverfahren ist eine Herstellung der Lagerbuchse 52 mit hoher Maß- und Formgenauigkeit möglich.

Auf ihrer Innenseite weist die Lagerbuchse 52 in ihrem in axialer Richtung, das heißt in Richtung der Längsachse 19 des Ankerbolzens 18, betrachtet mittleren Bereich eine leicht konvex gewölbte Lagerfläche 54 mit einem Durchmesser d auf, in der der Ankerbolzen 18 mit geringem radialem Spiel geführt ist. Die Lagerfläche 54 der Lagerbuchse 52 weist vorzugsweise eine nitrocarburierte Oberflächenschicht auf. Die nitrocarburierte Oberflächenschicht wird durch Anreicherung der Randschicht des Stahls mit Stickstoff und Kohlenstoff bei gleichzeitiger Erwärmung des Stahls erzeugt Die Oberfläche der Lagerfläche 54 ist außerdem vorzugsweise geschliffen, insbesondere gleitgeschliffen, also in Richtung der Längsachse 19 des Ankerbolzens 18 geschliffen. Durch die nitrocarburierte und geschliffene Oberfläche der Lagerfläche 54 werden gute Gleiteigenschaften und eine hohe Verschleißfestigkeit erreicht In axialer Richtung schließen sich auf der Innenseite der Lagerbuchse 52 an die Lagerfläche 54 nichtzylindrische Flächen 56 an, die beispielsweise etwa konisch oder gewölbt ausgebildet sein können. Die Flächen 56 sind derart ausgebildet, dass sich der Innendurchmesser der Lagerbuchse 52 von der Lagerfläche 54 in axialer Richtung weg vergrößert Zwischen dem Ankerbolzen 18 und den Flächen 56 ist somit ein größeres radiales Spiel vorhanden als zwischen dem Ankerbolzen 18 und der Lagerfläche 54, so dass die Führung des Ankerbolzens 18 im wesentlichen nur in der Lagerfläche 54 erfolgt

Der Innendurchmesser d und der Außendurchmesser D und somit die Wandstärke der Lagerbuchse 52 können in weiten Bereichen beliebig gewählt werden. Mit der Lagerbuchse 52 können somit relativ große Durchmesserunterschiede zwischen dem Lagerbolzen 18 und der Aufnahme der Lagerbuchse 52 im Magnettopf 20 ausgeglichen werden. Dies erleichtert die Herstellung des Magnettopfs 20, da dieser im Bereich des Ankers 16 einen relativ großen Durchmesser aufweisen muss und die sich daran anschließende Aufnahme für die Lagerbuchse 52 im Durchmesser nur wenig kleiner ausgeführt werden muss, da der Durchmesserunterschied zum Ankerbolzen 18 durch die Lagerbuchse 52 ausgeglichen wird.

## Patentansprüche

1. Kraftstoffzumesseinheit zur saugseitigen Fördermengenregelung einer Kraftstoffhochdruckpumpe einer Kraftstoffeinspritzeinrichtung für eine Brennkraftmaschine, wobei die Kraftstoffzumesseinheit ein von einem Elektromagneten (10) betätigtes Regelventil (12) mit einem Ventilglied (34) aufweist, wobei der Elektromagnet (10) einen Anker (16) und einen Ankerbolzen (18) aufweist und wobei der Ankerbolzen (18) in wenigstens einer Lagerbuchse (52) axial verschiebbar gelagert ist, wobei die wenigstens eine Lagerbuchse (52)-als massives ungeteiltes Bauteil aus Metall ausgeführt ist und die Lagerbuchse (52) eine Lagerfläche (54) aufweist, in der der Ankerbolzen (18) geführt ist, **dadurch gekennzeichnet, dass** die Lagerfläche (54) der Lagerbuchse (52) in Richtung der Längsachse (19) des Ankerbolzens (18) leicht konvex gewölbt ist und wobei sich in der Lagerbuchse (52) an die Lagerfläche (54) in axialer Richtung des Ankerbolzens (18) nichtzylindrische Flächen (56) anschließen, wobei die nichtzylindrischen Flächen (56) konisch oder gewölbt ausgebildet sind; wobei sich der Innendurchmesser d der Lagerbuchse (52) in axialer Richtung von der Lagerfläche (54) weg vergrößert.

2. Kraftstoffzumesseinheit nach Anspruch 1, **dadurch gekennzeichnet, dass** die Lagerbuchse (52) durch spanende Bearbeitung hergestellt ist.

3. Kraftstoffzumesseinheit nach Anspruch 1 oder 2, **dadurch gekennzeichnet, dass** die Lagerbuchse (52) aus Stahl hergestellt ist und zumindest auf der Lagerfläche (54), in der der Ankerbolzen (18) geführt ist, eine nitrocarburierte Oberflächenschicht aufweist.

4. Kraftstoffzumesseinheit nach einem der Ansprüche 1 bis 3, **dadurch gekennzeichnet, dass** die Lagerfläche (54) der Lagerbuchse (52) eine gleitgeschliffene Oberfläche aufweist.

5. Kraftstoffhochdruckpumpe für eine Kraftstoffeinspritzeinrichtung einer Brennkraftmaschine mit einer Kraftstoffzumesseinheit zur saugseitigen Fördermengenregelung, **dadurch gekennzeichnet, dass** die Kraftstoffzumesseinheit nach einem der Ansprüche 1 bis 4 ausgebildet ist.

## Claims

1. Fuel metering unit for suction-side delivery rate regulation of a high-pressure fuel pump of a fuel injection device for an internal combustion engine, wherein the fuel metering unit has a regulating valve (12) which is actuated by an electromagnet (10) and which has a valve element (34), wherein the electromagnet (10) has an armature (16) and an armature pin (18) and wherein the armature pin (18) is mounted in an axially displaceable manner in at least one bearing bush (52), wherein the at least one bearing bush (52) is in the form of a solid, undivided component composed of metal, and the bearing bush (52) has a bearing surface (54) in which the armature pin (18) is guided, **characterized in that** the bearing surface (54) of the bearing bush (52) is slightly convexly arched in the direction of the longitudinal axis (19) of the armature pin (18), and wherein, in the bearing bush (52), the bearing surface (54) is adjoined in the axial direction of the armature pin (18) by non-cylindrical surfaces (56), wherein the non-cylindrical surfaces (56) are of conical or arched form, wherein the inner diameter d of the bearing bush (52) increases in the axial direction away from the bearing surface (54).

2. Fuel metering unit according to Claim 1, **characterized in that** the bearing bush (52) is produced by a cutting machining process.

3. Fuel metering unit according to Claim 1 or 2, **characterized in that** the bearing bush (52) is produced from steel and has a nitrocarburized surface layer at least on the bearing surface (54) in which the armature pin (18) is guided.

4. Fuel metering unit according to one of Claims 1 to 3, **characterized in that** the bearing surface (54) of the bearing bush (52) has a vibratory-finished surface.

5. High-pressure fuel pump for a fuel injection device of an internal combustion engine, having a fuel metering unit for suction-side delivery rate regulation, **characterized in that** the fuel metering unit is designed according to one of Claims 1 to 4.

## Revendications

1. Unité de dosage du carburant pour la régulation de la quantité refoulée côté aspiration d'une pompe à carburant haute pression d'un dispositif d'injection de carburant pour un moteur à combustion interne, dans laquelle l'unité de dosage de carburant présente une soupape de régulation (12) actionnée par un électroaimant (10), avec un organe de soupape (34), l'électroaimant (10) présentant un induit (16) et un goujon d'induit (18) et le goujon d'induit (18) étant monté de manière à pouvoir coulisser axialement dans au moins une douille palier (52), l'au moins une douille palier (52) étant réalisée sous forme de composant massif non divisé en métal, et la douille palier (52) présentant une surface de palier (54) dans laquelle est guidé le goujon d'induit (18), **caractérisée en ce que** la surface de palier (54) de la douille palier (52) est cintrée de manière légèrement convexe dans la direction de l'axe longitudinal (19) du goujon d'induit (18) et des surfaces non cylindriques (56) se raccordent dans la douille palier (52) à la surface de palier (54) dans la direction axiale du goujon d'induit (18), les surfaces non cylindriques (56) étant réalisées sous forme conique ou cintrée, le diamètre intérieur d de la douille palier (52) augmentant en s'éloignant dans la direction axiale de la surface de palier (54).

2. Unité de dosage du carburant selon la revendication 1, **caractérisée en ce que** la douille palier (52) est fabriquée par usinage par enlèvement de copeaux.

3. Unité de dosage du carburant selon la revendication 1 ou 2, **caractérisée en ce que** la douille palier (52) est fabriquée en acier et est présente au moins sur la surface de palier (54) dans laquelle est guidé le goujon d'induit (18), une couche de surface nitrocarburée.

4. Unité de dosage du carburant selon l'une quelconque des revendications 1 à 3, **caractérisée en ce que** la surface de palier (54) de la douille palier (52) présente une surface polie.

5. Pompe à carburant haute pression pour un dispositif d'injection de carburant d'un moteur à combustion interne comprenant une unité de dosage du carburant pour la régulation de la quantité refoulée côté aspiration, **caractérisée en ce que** l'unité de dosage du carburant est réalisée selon l'une quelconque des revendications 1 à 4.
